# FASCICULE DE BREVET EUROPEEN

(11) **EP 0 667 277 B1**
(45) Date de publication et mention de la délivrance du brevet: **25.03.1998**
(21) Numéro de dépôt: 95400211.9
(22) Date de dépôt: 01.02.1995
(51) Int. Cl.: B62D 1/19

(54) **Système anti-remontée de l'axe volant d'une colonne de direction**
System gegen Wiederaufsteigen der beweglichen Achse einer Lenksäule
Anti push-back system of the movable axis of a steering column

(30) Priorité: 09.02.1994 FR 9401473
(43) Date de publication de la demande: 16.08.1995
(73) Titulaire: LEMFÖRDER NACAM SA, 41100 Vendôme (FR)
(72) Inventeur: Jollet, Alain, F-41100 Vendome (FR); Blais, Jean-René, F-41100 Vendome (FR)
(74) Mandataire: Phélip, Bruno

(56) Documents cités:
- FR-A- 2 668 442
- LU-A- 56 385
- US-A- 3 791 233

## Description

La présente invention est relative à une colonne de direction de véhicule automobile comportant un axe volant guidé et monté dans un corps de colonne relié rigidement à la structure du véhicule. Cette colonne de direction comporte un système anti-remontée de l'axe volant en cas de choc.

Lorsqu'un véhicule automobile subit un choc frontal, le volant porté par la colonne de direction a tendance à être déplacé dans l'habitacle du véhicule en direction du conducteur. Il existe de nombreuses solutions destinées à amortir l'énergie en cas de choc, et à éviter l'impact du conducteur avec le volant. Dans ce genre de solution, il est difficile de connaître de façon précise la limite du déplacement de l'axe volant lors du choc, c'est-à-dire le déplacement du volant lui-même par rapport au conducteur.

Le document US-3.791.233 décrit une colonne de direction de véhicule comprenant les caractéristiques définies dans le préambule de la revendication 1. Elle comprend un volant et un assemblage d'axe-volant qui s'étend entre le volant et les moyens de transmission de mouvement du volant aux roues. L'assemblage d'axe-volant est divisé en une partie supérieure portant le volant et une partie inférieure fixée aux moyens de transmission de mouvement. Les deux parties sont disposées coaxialement pour un mouvement relatif télescopique.

Le document LU-A-56385 concerne une colonne de direction pour véhicule. Cette colonne comporte, à sa partie inférieure, une zone à paroi ondulée en forme de soufflet servant à absorber les chocs.

Le but de la présente invention est de proposer un système anti-remontée de l'axe volant de la colonne de direction qui permette en cas de choc de connaître exactement la position extrême qu'aura l'axe volant avec le volant, par rapport à la planche de bord, c'est-à-dire par rapport au conducteur.

Un autre but de l'invention est encore de disposer d'un système anti-remontée de l'axe volant de la colonne de direction pouvant être combiné avec un système anti-vol.

L'invention a pour objet une colonne de direction telle qu'indiquée dans la revendication 1.

D'autres modes de réalisation font l'objet des revendications 2 à 11.

Avantageusement la colonne de direction est munie d'un système anti-vol.

Dans ce cas, le manchon interne a au moins une ouverture axiale dans la partie cylindrique de manière à laisser passer un pêne du système anti-vol. L'axe du volant est libre en rotation lorsque le système anti-vol est non actionné. Lorsque le système antivol est actionné le pène du système antivol est introduit dans une ouverture du manchon prévue à cet effet, et bloque en rotation l'axe du volant.

Avantageusement selon l'invention, le décrochement de l'axe volant entre ces deux parties cylindriques est une partie conique qui a le même axe que lesdites parties cylindriques, et qui peut avoir un angle de l'ordre de 45° par rapport à cet axe des parties cylindriques.

De plus, dans une structure préférentielle de l'invention, la paroi transversale de l'épaulement du manchon interne comporte une partie conique de raccordement avec la partie cylindrique, de manière à ce qu'elle coopère avec la partie conique correspondante du corps de colonne.

Dans la réalisation du manchon interne selon l'invention, il est particulièrement intéressant que ce manchon soit une pièce monobloc. Dans ce cas, il existe plusieurs variantes de l'invention où le manchon est constitué soit par une tôle roulée, soit par une pièce moulée, soit par une pièce frappée, ou soit encore par une pièce usinée.

La colonne de direction équipée du système anti-remontée de l'axe volant selon l'invention, présente ainsi l'avantage de limiter de façon précise le déplacement de l'axe et du volant de l'avant vers l'arrière du véhicule en cas de choc, ce qui permet d'éliminer les blessures que subirait un conducteur sur le volant lors d'un impact.

Il est également avantageux qu'il existe une interférence directe entre l'axe-volant et le manchon.

D'autres avantages ressortiront de l'invention qui sera mieux comprise à l'aide de la description donnée ci-dessous d'exemples particuliers de réalisation, décrits à titre non limitatif en référence aux dessins annexés sur lesquels:
La Figure 1 représente en coupe axiale, le système anti-remontée de l'axe volant d'une colonne de direction selon l'invention dans la position bloquée par l'anti-vol.
La Figure 2 est une vue analogue à la Figure 1 représentant l'axe volant dans la position qu'il a après un choc, et en situation non bloquée par l'anti-vol.
La Figure 3 est une vue analogue à la Figure 1 d'une variante de réalisation de l'invention, le pêne de la cartouche anti-vol n'ayant pas été représenté.

La colonne de direction représentée sur les Figures comporte un axe volant 1, qui est guidé et monté par un ou deux paliers 3 dans le corps de colonne 2. Le corps de colonne 2 est lui-même fixé rigidement à un support 4 de colonne, qui est relié à la structure du véhicule automobile.

Un manchon interne 5 est monté à l'intérieur du corps de colonne 2, avec lequel il est solidaire. Ce manchon interne 5 est disposé dans la zone où est agencé le système anti-vol constitué par une cartouche anti-vol 14 comportant un pêne 13. Cette cartouche anti-vol 14 est montée dans un tube qui est fixé sur le corps de colonne 2. Afin de pouvoir laisser passer le pêne 13 de la cartouche anti-vol 14, le manchon interne 5 est muni d'une ouverture axiale 12.

Le manchon interne 5 remplit une fonction de renfort du système anti-vol. Le manchon interne 5 est constitué par une partie cylindrique 6 qui a un diamètre interne D₁. L'extrémité externe de cette partie cylindrique 6 est munie d'un épaulement 7, qui est constitué par une paroi transversale ayant une ouverture circulaire 8 de diamètre D₂.

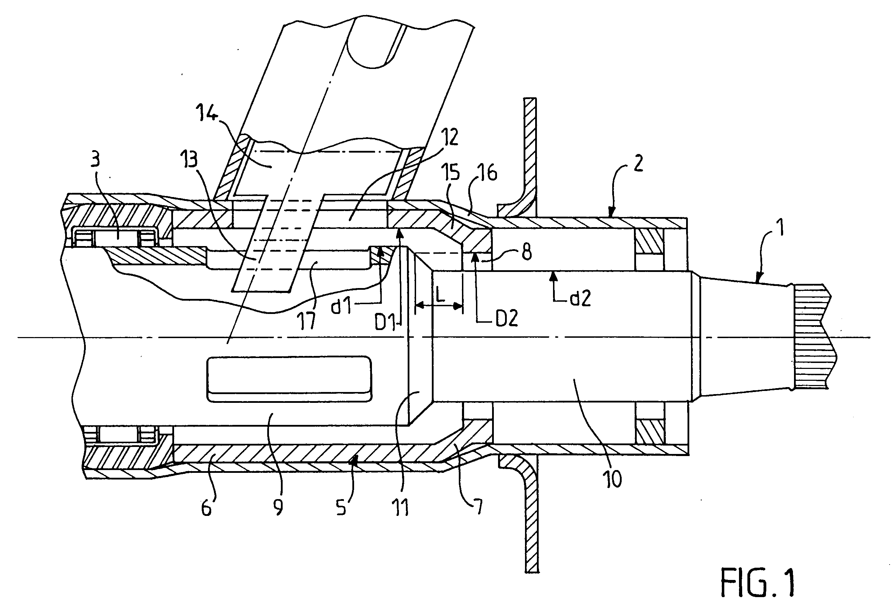

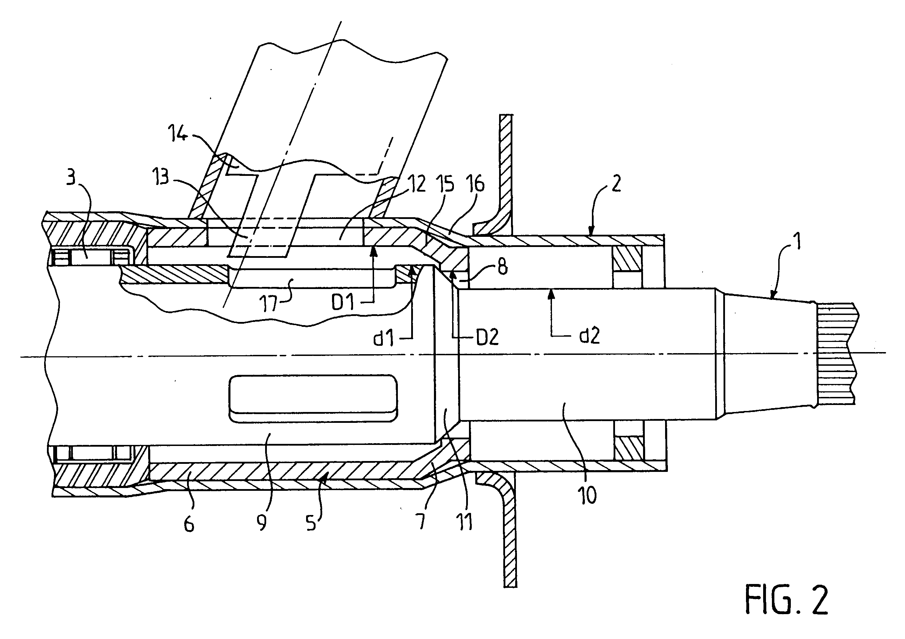

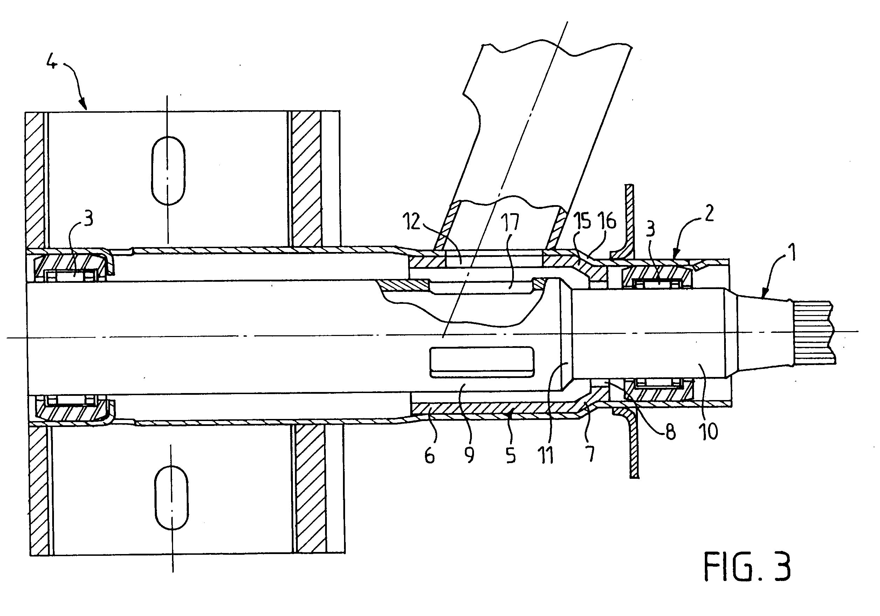

Dans les modes de réalisation du manchon interne 5 représenté sur les Figures, la paroi transversale de l'épaulement 7 de ce manchon interne 5 comporte une partie conique 15 de raccordement avec la partie cylindrique 6. Cette partie conique 15 est agencée de manière à ce qu'elle puisse coopérer avec une partie conique 16 correspondante du corps de colonne 2, de manière que le manchon interne ait une position axiale correctement déterminée par rapport au corps de colonne 2, avec lequel il est solidaire. Dans le cas des Figures 1 et 2, la partie conique 15 du manchon interne 5 et la partie conique 16 du corps de colonne 2 n'ont pas le même angle. Dans le cas de réalisation de la Figure 3, la partie conique 15 du manchon interne 5, et la partie conique 16 du corps de colonne 2 ont l'une et l'autre le même angle de cône.

L'axe volant 1 comporte deux parties cylindriques référencées respectivement 9 et 10. La partie cylindrique 9 a un diamètre d₁, et la partie cylindrique 10 a un diamètre d₂. Le diamètre d₁ est plus grand que le diamètre d₂ et les deux parties cylindriques 9 et 10 sont raccordées par un décrochement 11.

Afin que l'axe volant 1 soit libre en rotation, lorsque le système anti-vol est non actionné, le diamètre interne D₁ du manchon interne 5 est plus grand que le diamètre d₁ de la partie cylindrique 9 de l'axe volant 1, tandis que le diamètre D₂ de l'ouverture circulaire 8 du manchon interne 5 est plus grand que le diamètre d₂ de la partie cylindrique 10 de l'axe volant 1.

Selon une caractéristique essentielle de l'invention, le diamètre d₁ de la partie cylindrique 9 de l'axe volant 1 est plus grand que le diamètre D₂ de l'ouverture circulaire 8 du manchon interne 5. L'épaulement 7 du manchon interne 5 et le décrochement 11 de l'axe volant 1 sont disposés axialement l'un par rapport à l'autre, de manière qu'il soit écarté d'une valeur L prédéterminée. Cette valeur L représente la course de l'axe volant 1 lorsque le décrochement 11 vient buter contre l'épaulement 7 du manchon interne 5, lors d'un choc.

Comme on peut le voir sur les Figures, le décrochement 11 de l'axe volant 1 entre les deux parties cylindriques 9 et 10 est une partie conique, qui a le même axe que lesdites parties cylindriques 9 et 10. De plus, dans un mode préférentiel de l'invention, cet angle est de l'ordre de 45° par rapport à l'axe des parties cylindriques 9 et 10.

Dans un mode de réalisation de l'invention, le manchon 5 est une pièce monobloc comme cela est représenté sur les Figures. Dans ce cas, la réalisation de ce manchon interne 5 peut être constituée par une tôle roulée, ou par une pièce moulée, ou par une pièce frappée, ou bien encore par une pièce usinée.

Une réalisation de l'invention propose ainsi un système anti-remontée de l'axe volant qui intègre aussi la fonction de renfort anti-vol, et qui agit par une interférence entre l'axe volant 1 et le manchon interne 5 solidaire du corps de colonne 2.

Le manchon interne 5 remplit ainsi deux fonctions. Tout d'abord il participe au maintien de la cartouche anti-vol 14 par l'ouverture axiale 12, et il reprend ainsi les efforts pour le corps de colonne 2, lorsqu'un couple est appliqué au volant lors d'une effraction. Une deuxième fonction de ce manchon interne 5 est donnée par l'épaulement 7 avec son ouverture D₂, qui empêche la remontée de l'axe volant 1, du fait de l'interférence avec le décrochement 11 conique de cet axe volant 1. De ce fait, l'intrusion du volant lors d'un choc sur le véhicule est limitée à la course d'une valeur L prédéterminée, qui représente l'écartement axial l'un par rapport à l'autre du décrochement 11 avec l'ouverture circulaire 8 de l'épaulement 7.

Comme cela a été décrit, il faut remarquer qu'en position normale, c'est-à-dire en dehors de choc, l'axe volant 1 tourne librement dans ses paliers 3, et qu'il n'y a pas de contact ou de frottement sur le manchon interne 5.

L'axe volant 1 est ainsi constitué d'une zone comportant la partie cylindrique 9 et qui reçoit le pêne 13 de la cartouche antivol 14. Pour ce faire, cette partie cylindrique 9 est munie de plusieurs ouvertures axiales 17, qui sont destinées à recevoir l'extrémité du pêne lorsque l'axe volant est en position bloquée. Cette zone est agencée pour pouvoir supporter les efforts générés par le couple appliqué au volant lors d'une effraction qui est de l'ordre de 200 mN. L'axe volant 1 comporte la partie cylindrique 10 qui permet la connexion avec le volant qui n'est pas représentée sur les Figures. Une zone intermédiaire entre les deux parties cylindriques 9 et 10 est constituée par le décrochement 11, qui sur les Figures est réalisé par une partie conique à 45°, cette zone venant interférer avec le diamètre D₂ du manchon interne 5.

Tout cet ensemble est assemblé comme cela a été décrit, de sorte que l'axe volant 1 est libre en rotation, lorsque leur système anti-vol est non actionné, c'est-à-dire qu'il n'y a pas d'interférence et de contact entre la partie cylindrique de diamètre D₁ du manchon interne 5 et la partie cylindrique 9 de diamètre _{d1} de l'axe volant 1, et entre l'ouverture circulaire 8 de diamètre du manchon interne 5, et la partie cylindrique 10 de diamètre _{d2} de l'axe volant 1. En résumé, comme cela a été dit précédemment, il faut que le diamètre D₁ soit plus grand que le diamètre d₁, et il faut que le diamètre D₂ soit plus grand que le diamètre d₂.

Lors d'un choc, l'axe volant 1 reçoit une poussée depuis l'avant du véhicule vers l'arrière. L'axe volant 1 se déplace alors de la valeur L prédéterminée par assemblage, avant contact entre l'axe volant 1 et le manchon interne 5. L'interférence qui existe du fait que le diamètre _{d1} de la partie cylindrique 9 de l'axe volant 1 est plus grand que le diamètre D₂ de l'ouverture circulaire 8 du manchon interne 5 est telle que l'axe volant est bloqué sous un effort de l'ordre de 15.000 N. Ainsi, le système anti-remontée de l'axe volant de la colonne de direction selon l'invention permet de déterminer de façon précise la course de l'axe volant et sa position après un choc, ce qui permet de limiter, sinon d'éliminer les blessures que subirait un conducteur sur le volant ou la planche de bord lors du choc de ce véhicule.

Les signes de référence insérés après les caractéristiques techniques mentionnées dans les revendications, ont pour seul but de faciliter la compréhension de ces dernières, et n'en limitent aucunement la portée.

## Revendications

1. Colonne de direction comportant un axe-volant (1) guidé et monté par un palier (3) dans un corps de colonne (2), qui est fixé rigidement à un support de colonne (4), ledit support étant relié à la structure du véhicule automobile, ladite colonne comportant un système anti-remontée de l'axe-volant, comprenant un manchon interne (5) solidaire dudit corps de colonne, ladite colonne étant caractérisée en ce que le manchon (5) présente une partie cylindrique (6) de diamètre interne D₁ dont une extrémité est munie d'un épaulement (7) constitué par une paroi transversale avec une ouverture circulaire (8) de diamètre D₂, l'axe-volant (1) ayant deux parties cylindriques (9, 10) de diamètres différents d₁ et d₂, raccordées par un décrochement (11), D₁ étant plus grand que d₁, D₂ étant plus grand que d₂, le diamètre d₁ de l'axe-volant (1) étant plus grand que le diamètre D₂ de l'ouverture circulaire (8), l'épaulement (7) du manchon (5) et le décrochement (11) de l'axe-volant (1) étant disposés axialement l'un par rapport à l'autre et écartés d'une valeur prédéterminée qui, lors d'un choc, représente la course de l'axe volant (1) dont le décrochement (11) vient alors buter contre l'épaulement (7) du manchon (5).

2. Colonne de direction selon la revendication 1, caractérisée en ce que l'axe-volant est guidé et monté par deux paliers.

3. Colonne de direction selon l'une des revendications 1 ou 2, caractérisée en ce qu'elle est munie d'un système antivol (14), l'axe du volant (1) étant libre en rotation lorsque le système antivol (14) est non actionné, le manchon (5) ayant au moins une ouverture axiale (12) dans la partie cylindrique (6) de manière à laisser passer un pêne (13) du système antivol (14).

4. Colonne de direction selon l'une quelconque des revendications précédentes, caractérisée en ce que le décrochement (11) de l'axe volant (1) entre les deux parties cylindriques (9) et (10) est une partie conique ayant le même axe que lesdites parties cylindriques (9, 10).

5. Colonne de direction selon la revendication 4, caractérisée en ce que le décrochement (11) est une partie conique ayant un angle de l'ordre de 45° par rapport à l'axe des parties cylindriques (9, 10).

6. Colonne de direction selon la revendication 5, caractérisée en ce que la paroi transversale de l'épaulement (7) du manchon (5) comporte une partie conique (15) de raccordement avec la partie cylindrique (6), de manière qu'elle coopère avec la partie conique (16) correspondante du corps de colonne (2).

7. Colonne de direction selon l'une quelconque des revendications précédentes, caractérisée en ce que le manchon (5) est une pièce monobloc.

8. Colonne de direction selon la revendication 7, caractérisée en ce que le manchon (5) est constitué par une tôle roulée.

9. Colonne de direction selon la revendication 7, caractérisée en ce que le manchon (5) est constitué par une pièce moulée.

10. Colonne de direction selon la revendication 7, caractérisée en ce que le manchon (5) est constitué par une pièce frappée.

11. Colonne de direction selon la revendication 7, caractérisée en ce que le manchon (5) est constitué par une pièce usinée.

## Claims

1. A steering column comprising a movable axis (1) guided and mounted on a bearing (3) in a column body (2) which is fixed rigidly to a column support (4), whereas the said support is connected to the structure of the automotive vehicle, whereas the said column comprises an anti push-back system of the movable axis, containing an internal sleeve (5) interconnected with the said column body, whereby the said column is characterised in that the sleeve (5) exhibits a cylindrical section (6) of internal diameter D1 one end of which is fitted with a shoulder (7) made up of a transversal wall with a circular opening (8) of diameter D2, whereas the movable axis (1) possesses two cylindrical sections (9, 10) of different diameters d1 and d2, connected by a crank (11), whereas D1 is greater than d1, D2 is greater than d2, the diameter d1 of the movable axis (1) is greater than the diameter D2 of the circular opening (8), the shoulder (7) of the sleeve (5) and the crank (11) of the movable axis (1) are arranged axially in relation to one another and at a pre-set distance which, in case of a shock, corresponds to the travel of the movable axis (1) whose crank (11) will then bump against the shoulder (7) of the sleeve (5).

2. A steering column according to claim 1, characterised in that the movable axis is guided and mounted by two bearings.

3. A steering column according to one of the claims 1 or 2, characterised in that it is fitted with a theft protection system (14), whereby the movable axis (1) is free to rotate when the theft protection system (14) is not actuated, whereas the sleeve (5) exhibits at least one axial opening (12) in the cylindrical section (6) in order to let a sliding bolt (13) through from the theft protection system (14).

4. A steering column according to any of the previous claims, characterised in that the crank (11) of the movable axis (1) between both cylindrical sections (9) and (10) is a conical section with the same axis as the said cylindrical sections (9, 10).

5. A steering column according to claim 4, characterised in that the crank (11) is a conical section with an angle in the order of 45° with respect to the axis of the cylindrical sections (9, 10).

6. A steering column according to claim 5, characterised in that the transversal wall of the crank (7) of the sleeve (5) comprises a conical section (15) for connection with the cylindrical section (6) so that it may co-operate with the corresponding conical section (16) of the column body (2).

7. A steering column according to any of the previous claims, characterised in that the sleeve (5) is a single piece part.

8. A steering column according to claim 7, characterised in that the sleeve (5) consists of a rolled sheet.

9. A steering column according to claim 7, characterised in that the sleeve (5) consists of a moulded part.

10. A steering column according to claim 7, characterised in that the sleeve (5) consists of a stamped part.

11. A steering column according to claim 7, characterised in that the sleeve (5) consists of a machined part.

## Patentansprüche

1. Lenksäule, umfassend einen in einem Lenksäulengehäuse (2), das an einer mit dem inneren Aufbau des Kraftfahrzeuges verbundenen Abstützung (4) starr befestigt ist, in einem Lager (3) geführten und montierten Lenkradachskörper (1), wobei die Lenksäule ein System gegen das Wiederanheben des Lenkradachskörpers aufweist, das eine mit dem Gehäuse fest verbundene, innere Hülse (5) enthält, wobei die Lenksäule dadurch gekennzeichnet ist, daß die Hülse (5) einen zylindrischen Abschnitt (6) mit einem Innendurchmesser D₁ aufweist, dessen eines Ende mit einem Bund (7) versehen ist, der durch eine Querwand mit einer Kreisöffnung (8) von einem Durchmesser D₂ gebildet ist, daß der Lenkradachskörper (1) zwei zylindrische Abschnitte (9, 10) mit unterschiedlichen Durchmessern d₁ und d₂ aufweist, die durch einen Absatz (11) miteinander verbunden sind, wobei D₁ größer als d₁, D₂ größer als d₂ und der Durchmesser d₁ des Lenkradachskörpers (1) größer als der Durchmesser D₂ der Kreisöffnung (8) ist, und daß der Bund (7) der Hülse (5) und der Absatz (11) des Lenkradachskörpers (1) in bezug zueinander axial angeordnet sind und sich bei einem vorbestimmten Wert trennen, der bei einem Stoß den Weg des Lenkradachskörpers (1) darstellt, dessen Absatz (11) dann an dem Bund (7) der Hülse (5) anstößt.

2. Lenksäule nach Anspruch 1, dadurch gekennzeichnet, daß der Lenkradachskörper in zwei Lagern geführt und montiert ist.

3. Lenksäule nach einem der Ansprüche 1 oder 2, dadurch gekennzeichnet, daß sie mit einem Diebstahlsicherungssystem (14) ausgerüstet ist, daß der Lenkradachskörper (1) bei nicht betätigtem Diebstahlsicherungssystem (14) frei drehbar ist und daß die Hülse (5) wenigstens eine axiale Öffnung (12) in ihrem zylindrischen Abschnitt (6) aufweist, derart, daß ein Riegel (13) des Diebstahlsicherungssystems (14) die Öffnung passieren kann.

4. Lenksäule nach einem der vorangehenden Ansprüche, dadurch gekennzeichnet, daß der Absatz (11) des Lenkradachskörpers (1) zwischen den beiden zylindrischen Abschnitten (9 und 10) ein konischer Abschnitt ist, der die gleiche Achslinie wie die zylindrischen Abschnitte (9, 10) aufweist.

5. Lenksäule nach Anspruch 4, dadurch gekennzeichnet, daß der Absatz (11) ein konischer Abschnitt mit einem Winkel in der Größenordnung von 45° in bezug auf die Achslinie der zylindrischen Abschnitte (9, 10) ist.

6. Lenksäule nach Anspruch 5, dadurch gekennzeichnet, daß die Querwand des Bundes (7) der Hülse (5) einen konischen Verbindungsabschnitt (15) mit dem zylindrischen Abschnitt (6) umfaßt, derart, daß er mit dem entsprechenden konischen Abschnitt (16) des Lenksäulengehäuses (2) zusammenwirkt.

7. Lenksäule nach einem der vorangehenden Ansprüche, dadurch gekennzeichnet, daß die Hülse (5) ein einstückiges Bauteil ist.

8. Lenksäule nach Anspruch 7, dadurch gekennzeichnet, daß die Hülse (5) durch ein gewalztes Blechteil gebildet ist.

9. Lenksäule nach Anspruch 7, dadurch gekennzeichnet, daß die Hülse (5) durch ein Gußteil gebildet ist.

10. Lenksäule nach Anspruch 7, dadurch gekennzeichnet, daß die Hülse (5) durch ein Schmiedeteil gebildet ist.

11. Lenksäule nach Anspruch 7, dadurch gekennzeichnet, daß die Hülse (5) durch ein spangebend hergestelltes Bauteil gebildet ist.
